## Europäisches Patentamt

(19) **European Patent Office**

**Office européen des brevets**

(11) Publication number: **0 119 200**
**B1**

(12) **EUROPEAN PATENT SPECIFICATION**

(45) Date of publication of patent specification: **21.03.90**

(21) Application number: **82903616.9**

(22) Date of filing: **27.10.82**

(86) International application number:
**PCT/US82/01526**

(87) International publication number:
**WO 84/01252 29.03.84 Gazette 84/09**

(60) Divisional application 89201265.9 filed on 27/10/82.

(51) Int. Cl.⁵: **H 04 N 5/782, G 11 B 15/48**

(54) Video recording and reproducing apparatus for controlling the transport of the tape.

(30) Priority: **17.09.82 PCt/us82/01284**

(43) Date of publication of application:
**26.09.84 Bulletin 84/39**

(45) Publication of the grant of the patent:
**21.03.90 Bulletin 90/12**

(84) Designated Contracting States:
**AT BE CH DE FR GB LI LU NL SE**

(56) References cited:
**GB-A-1 157 940**
**US-A-3 594 498**
**US-A-4 163 993**
**US-A-4 210 939**
**US-A-4 215 362**
**US-A-4 306 255**
**US-A-4 318 140**
**US-A-4 318 142**

**PATENTS ABSTRACTS OF JAPAN, vol. 5, no. 107 (P-70) 779r, July 11, 1981; & JP - A - 56 47944**

(73) Proprietor: **AMPEX CORPORATION**
**401 Broadway M.S. 3-35**
**Redwood City California 94063-3199 (US)**

(72) Inventor: **RODAL, David, R.**
**3363 Kenneth Drive**
**Palo Alto, CA 94303 (US)**

(74) Representative: **Horton, Andrew Robert Grant et al**
**BOWLES HORTON Felden House Dower Mews High Street**
**Berkhamsted Hertfordshire HP4 2BL (GB)**

## Description

The present invention generally relates to rotary head tape recording and reproducing apparatus and, more particularly, to a method and apparatus for controlling the transport of a tape during changes in the velocity of tape transport, and in its preferred embodiment, while maintaining tape transport servo lock and reproducing disturbance free information recorded on the transported tape during the velocity change interval.

When a video tape recording and reproducing apparatus is operated to assemble a video program, it is typically necessary to perform editing operations to formulate the desired program content from various video program sources. In the past, a program has often been assembled using several video recording and reproducing machines, and it has been necessary for the operator to synchronize several such machines prior to performing an editing operation. If several sources of material are to be used in formulating a video program, several video recording and reproducing machines must be placed sequentially in the reproducing mode while one other such machines is placed in the record mode to record the material on a single master tape. It has been necessary to perform a pre-roll synchronizing process by operating each of the several program source machines in their play or reproducing mode, and then varying the capstan velocity of the source apparatus by executing a "tape velocity override" (TSO) operation in each of the apparatus. As used herein, 'velocity' in contrast to 'speed' means a velocity of displacement of tape with directional significance, unless the context warrants otherwise and includes zero speed of tape transport. A TSO operation is executed to transport the tape at a velocity different from the normal recording and reproducing velocity, until the recorded time code reproduced from the tape (or color frame signal extracted from reproduced video information) associated with each of the machines between which a transfer of program material is to occur is synchronized for synchronous reproduction or recording of video program material. At that time, the recording machine is synchronously switched to record segments of the program material from the other program source machine that synchronously reproduces the desired segment. It should be quite apparent that if the operation of all program source machines can be rapidly synchronized, i.e., be placed in a color frame control track and capstan tachometer (tach) servo lock operating condition, then editing would be simplified and executed more expeditiously, particularly when several machines are being used to supply program source material for recording on the master tape. In a rotary head video tape recording and/or reproducing apparatus, such servo lock operating condition is achieved when the head is rotating and the tape is being longitudinally transported at desired nominal velocities, respectively, with the rotational or angular position (commonly referred to as phase) of the head being synchronized to a particular transition of the control track signal periodically recorded along the longitudinally transported tape and thereby with the position (or phase) of the tape. Prior art apparatus often require several seconds to obtain control track servo lock and to become color frame synchronized relative to a studio reference timing signal. It should be apparent that if a machine can be rapidly accelerated and color frame control track servo locked within a few milliseconds, rather than several seconds, the synchronizing of several machines would be facilitated and editing operations would be simplified.

Accordingly, it is the primary object of the present invention to operate a rotary head tape recording and reproducing apparatus to control the transport of a tape during changes in the velocity of tape transport, permitting information recorded on the tape to be reproduced with minimum time disturbances and without the loss of information.

A particular object of the present invention is to provide an apparatus of the foregoing type which, when the transported tape is stopped from being transported at a velocity other than zero speed, the deceleration of the tape is initiated precisely with respect to the system controlling reference, typically the station vertical sync signal, so that subsequent acceleration of the tape to normal record and/or reproduce velocity can be achieved with an instantaneous control track servo lock condition.

It is known from US-A-4215362 to provide apparatus for positioning a tape in a video tape recording and reproducing machine with control track transitions recorded longitudinally along the tape at a predetermined position relative to the nominal plane of rotation of a rotating head for reproducing video information from the tape, the rotating head being mounted on a movable element for displacing the head transversely relative to the longitudinal direction of tracks along which the video information is recorded synchronously relative to the control track transitions, the movable element being controlled by a head tracking position servo to cause the head to follow the tracks as video information are reproduced therefrom when the transport of the tape is stopped, the recorded video information including synchronizing signals which are reproduced from the tape by the rotating head. The present invention is characterised by: means for stopping the transport of the tape in response to a stop command; means responsive to the reproduction of a selected synchronizing signal after the tape is stopped and a reference timing signal for generating an error signal indicative of a phase error in the selected synchronizing signal; and means responsive to the error signal for generating a tape transporting drive signal for effecting movement of the tape a distance and in a direction to eliminate the indicated phase error.

According to a preferred embodiment, the invention provides apparatus for stopping the transport of a tape in a video tape recording and reproducing machine with control track transitions recorded longitudinally along the tape located at a predetermined position relative to a transducer for transferring information with respect to the tape, the operation of the machine being controlled in accordance with reference signals including reference field identification signals identifying a sequence of a plurality of distinct reference field intervals recurring at a stable rate, the transport of the tape being effected by a capstan, characterised by: means for decelerating the transport of the tape to stop in response to a stop command; means for comparing the phase of the capstan to the phase of a stable reference signal during the deceleration of the transport of the tape and generating an error signal indicative of the difference in compared phases; and means for controlling the capstan in accordance with the error signal as the transport of the tape is decelerated and stopped to locate the control track transition at the predetermined position.

According to another aspect the invention provides a method of stopping the transport of a tape in a video tape recording and reproducing machine with control track transitions recorded longitudinally along the tape located at a predetermined position relative to a transducer for transferring information with respect to the tape, the operation of the machine being controlled in accordance with reference signals including reference field identification signals identifying a sequence of a plurality of distinct reference field intervals recurring at a stable rate, the transport of the tape being effected by a capstan controlled by a capstan servo, characterised by: issuing a stop command to effect stopping of the transport of the tape; decelerating the transport of the tape to stop in response to the occurrence of a predetermined one of the reference field intervals following the issuance of the stop command; comparing the phase of the capstan to the phase of a stable reference signal during the deceleration of the transport of the tape; and controlling the capstan servo in accordance with the phase comparison to eliminate any phase difference between the compared signals as the transport of the tape is decelerated and stopped to locate the control track transitions at the predetermined position.

Description of the Drawings

Figure 1 is a graph illustrating the desired and actual profiles of the tape position versus time, specified in television field intervals, during the acceleration of the transport of the tape from stop to normal velocity, with the tape position taken relative to the nominal position of the rotating video head that scans the tape to reproduce video information therefrom;

Figure 2 is a graph illustrating desired and actual capstan velocity profiles versus time during acceleration of the transport of the tape from stop to normal velocity;

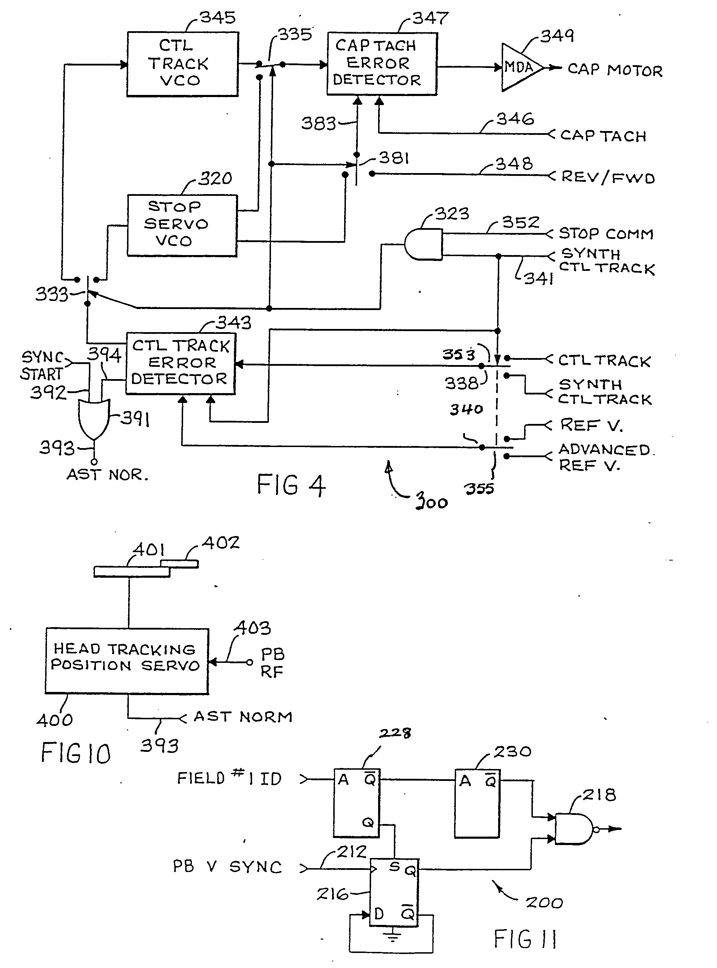

Figure 3 is a graph of movement of a video head mounted at the end of a movable element which moves the video head transversely relative to the longitudinal direction of a track of recorded video information and shows the displacement of the head by the movable element during illustrated field intervals, with the first two field intervals reproduced while the transport of the tape is stopped, or at zero tape speed, commonly referred to as the still field reproducing mode. The third and fourth field intervals show the displacement required of the head to maintain it registered on a track during acceleration of the transport of the tape from stop to normal reproducing velocity;

Figure 4 is a functional block diagram of a capstan servo arranged to operate in accordance with the present invention;

Figure 5 is a voltage versus phase characteristic of the capstan servo described herein;

Figure 6 is a functional block diagram illustrating the portion of the capstan servo of the present invention which measures the phase, i.e., angular position of the capstan relative to its controlling reference;

Figure 7 is a functional block diagram of the stop servo incorporated in the capstan servo of the present invention which correctly positions the tape relative to the nominal tracking position of the video reproduce head when stopping the tape from a non-color frame control track locked operating condition;

Figures 8A, 8B, 8C and 8D together comprise an electrical schematic diagram of a portion of the capstan servo circuitry of the present invention illustrating the phase comparator circuitry shown in the block diagram of Figure 6;

Figures 9A, 9B, 9C and 9D together comprise an electrical schematic diagram of the remainder of the capstan servo circuitry, illustrating the sample and hold circuitry and the stop servo circuitry shown in the block diagram of Figure 7, as well as the circuitry which performs the color framing function;

Figure 10 is a functional block diagram of an automatic head position tracking system which operates to maintain a movable rotary head registered on tracks of recorded information as information is reproduced from the tape transported at different velocities; and

Figure 11 is a logic diagram of the synthetic control track signal generator operatively associated with the capstan servo of the present invention.

Detailed Description

Broadly stated, the present invention is directed to a method and apparatus for controlling the transport of a tape longitudinally transported in a path relative to a rotating head as information is reproduced from the tape during changes in the velocity of the tape transport, permitting recorded information to be reproduced without objectionable loss and with minimum time disturbance. In the preferred embodiment described hereinbelow with reference to the drawings, the tape transport velocity change is achieved with virtually an immediate synchronous operating condition obtained between the rotating record and/or reproduce head and the longitudinally transported tape before a tape transport velocity change to a normal record and/or reproduce transport velocity. In the preferred embodiment, a rotary head video tape record and/or reproduce apparatus is color frame control track servo locked immediately upon commanding the apparatus to enter the normal play tape velocity operating condition from a tape transport stop condition or from a tape transport velocity other than the normal record and reproduce velocity. In its most preferred embodiment, the apparatus is part of a helical wrap video tape recording and reproducing apparatus of the type which has a video reproducing head mounted at the end of a movable element which is capable of moving the head transversely relative to the longitudinal direction of a track along the tape. A head position tracking servo controls the movable element to cause the head to follow a track as information is reproduced therefrom and selectively repositions the head to begin following the next desired track from which information is to be reproduced. With a head position tracking servo, the apparatus is capable of the noise-free reproduction of recorded information at various velocities of tape transport. In such apparatus arranged to record and reproduce video (i.e., television signal) information, the movable head enables various special effects to be reproduced from the recorded video information, such as still field or frame motion, variable slow motion, fast motion and reverse motion. This capability is described in several patents and applications, including US 4,163,993 to Ravizza, and is incorporated in various video production recorders marketed by Ampex Corporation, such as the models known as VPR-1 and VPR-2. In the video production recorders marketed by Ampex, a single video head is provided to reproduce video information recorded on the tape and is controlled in the manner described in the aforementioned Ravizza patent to reproduce the information while the tape is transported at various velocities and in opposite directions to generate special motion effects. As is described in the aforementioned Ravizza patent, the movable element is controllable to cause the video head to reliably follow a track during the reproduction of video information therefrom and to correctly position the head to begin following the next desired track from which video information is to be reproduced.

When the apparatus is operated to reproduce still field effects, the transport of the tape is stopped, i.e., at a speed of zero, and the movable video head must be reset at the end of the scan of each track to begin following the same track, thereby to repeat the reproduction of the same field of video information. Such resetting is effected for as long as the apparatus is operated to reproduce the still field motion effect. During such operation, the voltage applied to the movable element for producing the desire displacement of the element is in the form of a sawtooth wave-form, whose level is examined against a reset determining reference during the revolution of the video head to determine if the movable element is to be reset or permitted to remain in position at the end of the scan of each track by the movable video head, all as is fully discussed in the aforementioned Ravizza patent. When the head position tracking servo is operating together with the apparatus of the present invention, switching from the still motion effect operation when the transport of the tape is stopped to the normal reproduction of the video information when the tape is transported at the normal reproduce velocity permits proper color framing to be accomplished when the tape transport is stopped followed by rapid acceleration of the transport of the tape to the normal reproduce velocity with the servoed movable head reproducing each recorded track once without objectionable signal degradation. It is important to appreciate that color frame control track servo lock is retained and a video information signal is reproduced without objectionable signal degration through the tape acceleration interval with no resetting and repeat reproduction of a track occurring. The acceleration of the tape transport is sufficiently fast that color framing is retained and the video information is reproduced from each track scanned by the video head without any head deviation from the track that would introduce disturbances in the display of the reproduced video information.

The velocity change can be executed in accordance with the present invention without objectionable loss of information and with minimum timing disturbance introduced into the reproduced information during an operating condition when the velocity of tape transport is changed between two velocities not starting with a zero transport velocity and not ending at a normal reproduce velocity; thus the mode of reproduction may be changed between different special motion effects without entering the still field mode. As will be described in further detail hereinafter, the velocity change operation is executed in the same manner from all special effects tape transport speeds. However it may be preferable to first change the transport of the tape to zero tape transport velocity and then incrementally move the tape after the transport of the tape is stopped to position an identifiable control track transition precisely relative to the nominal rotational plane of the undeflected video head position when the operation is executed from a special effects tape transport velocity other than zero velocity or stop. This facilitates the execution of the subsequent acceleration of the tape to the desired final tape transport velocity without objectionable loss of reproduced information or introduction of disturbances in the display of the reproduced information. In accordance with the present invention, timing information included in the reproduced information, e.g., the control track signal, vertical sync or the equivalent included in a television signal, capstan tach, or the like, must be provided in a manner so as to indicate the nominal velocity of transport of the tape during any velocity from or to which the tape is transported during a velocity change.

The present apparatus includes circuitry which selectively functions under special conditions determined by such factors as: the operating mode of the apparatus; whether a change in the mode of operation is commanded; whether the transport of the tape is accelerated from stop condition or a velocity other than the normal tape transport velocity; and whether the tape is previously stopped from a control track locked condition or a noncontrol track locked condition. These conditions determine the velocity of transport of the tape and, therefore, the nature of the control required to effect the desired velocity change operation to the selected final tape transport velocity without objectionable loss of reproduced information or introduction of disturbances in the display of the reproduced information. The selected final tape transport velocity is determined by a system timing signal provided to maintain a selected tape transport velocity. The tape transport velocity control circuitry relies for its operation on its ability to control the execution of the desired velocity change so that the net displacement between nominal plane of rotation of the rotary head and the tape during the velocity change interval is proportional to the product of (i) the difference between the final selected velocity of tape transport and the velocity of tape transport from which the velocity change interval is executed and (ii) the time taken to execute the velocity change. When a velocity change is executed to provide a final selected tape transport velocity corresponding to the normal record and/ or reproduce tape transport velocity, timing information indicative of the rate of reproduction of the information recorded on tape relative to a system time reference is employed to effect the control of the velocity change. A record control track signal and vertical sync contained in the reproduced information are examples of such signals available in rotary head video tape recording and reproducing apparatus. Information signals recorded on the tape that contain a timing component which is synchronously recorded with a control track information signal that contains identifiable separate intervals periodically recorded along the tape provide the ability to obtain accurate measures of the velocity at which the tape is transported and the position of the transported tape with respect to the nominal rotational plane of the rotary head location in the longitudinal direction of tape transport.

The tape transport control circuitry is responsive to a system reference timing signal and at least a system timing signal of corresponding nature from which the velocity of tape transport and position of the transported tape with respect to the nominal rotary head location in the longitudinal direction of tape transport can be determined. Each of these signals defines a plurality of separate and identifiable intervals of corresponding nature that periodically recur. To facilitate the desired control of the tape transport velocity change, it is advantageous to employ a timing component contained in the reproduced information signal and the control track signal recorded on the tape as the system timing signal with respect to which the execution of the velocity change is controlled. Upon the occurrence of a selected time relationship between identical ones of the identifiable intervals in the received signals, the tape transport control circuitry generates a command signal to the tape transport servo associated with the tape transport drive mechanism to effect the selected velocity change in tape transport to cause the tape to be transported at a selected final velocity. The servo responds to the command signal to control the tape transport drive mechanism to cause execution of the tape transport velocity change at a rate for a velocity change interval that results in a displacement of the transported tape at the end of the velocity change interval proportional to the aforedescribed product of the velocity change and interval of the velocity change, adjusted for any residual displacement of the rotating head in the direction of tape transport at the end of the velocity change interval, which head is operated to reproduce the information signal. This adjusted displacement is referred to herein as net displacement. The proportional relation between the displacement and the aforementioned product is determined by the acceleration characteristic of the portion of the tape transport mechanism affecting the acceleration of the tape. This can be determined for the tape transport mechanism by observing the velocity profile followed by the transported tape in response to a step velocity change command.

To maintain a disturbance-free reproduction of the recorded signal during the velocity change interval, it is preferred to execute the velocity change so that the timing relationship between the received identifiable intervals of the reference timing signal and of the system timing signal is retained during the velocity change interval. The rate of change in tape transport velocity required to retain such desired timing relationship is determined by the difference between the reference timing signal frequency and the velocity of the transported tape (hence, the system timing signal frequency) at the time of the initiation of the velocity change.

As will become apparent from the following description, it is preferable that the tape displacement be achieved without a change in the timing relationship between recurring identifiable intervals of the reference timing signal and of the system timing signal to a corresponding timing relationship of periods of the periodically occurring signals different from those which resulted in the initiation of the velocity change. However, it may not be possible to accelerate the tape at a sufficient rate to achieve this, for example, when one uses large and massive tape reels or a delicate tape which is incapable of withstanding the stress associated with such acceleration. Accordingly, a difference count is maintained between the number of periods of the reference timing signal and the system timing signal occurring during the tape transport velocity change interval, which is representative of the displacement, so that, although the desired timing relationship resulting in the initiation of the tape transport velocity change is lost during the execution of the velocity change, it is recaptured at the conclusion of the execution of the velocity change. Thus, this necessarily results in retaining the transport servo lock condition established at the time of the initiation of the tape transport velocity change at the conclusion of the velocity change interval. The transport servo responds to a velocity change command signal generated upon the occurrence of a selected time relationship between identical ones of the identifiable intervals in the reference and system timing signals to control the tape transport drive mechanism to cause execution of the tape transport velocity change at a rate that results in a zero net displacement of the longitudinal tape position relative to the nominal rotary head position in the direction of tape transport.

In a rotary head tape recording and reproducing apparatus in which the rotary head is not permitted to be displaced in a direction transverse to the longitudinal direction of the track, the transport drive mechanism must drive the tape according to a velocity profile which includes an interval during which the tape is transported to a velocity different from the selected final velocity in order to achieve the desired net displacement condition. For example, if the tape is transported at a velocity less than the selected final velocity at the time of initiation of the velocity change, the tape must be transported to a velocity greater than the selected final velocity for an interval to produce a zero net displacement. Conversely, if the tape is being transported at a greater velocity than the selected final velocity at the time of the initiation of the velocity change, the transport of the tape must be decelerated to a velocity less than the selected final velocity for an interval to produce a zero net displacement.

In rotary head tape recording and reproducing apparatus provided with a head that is displaceable in the longitudinal direction of the track to maintain track registration, the head can be displaced to aid in achieving the aforedescribed desired zero net displacement condition during a tape transport velocity change. The head is displaced in a direction to reduce the magnitude of any such displacement. Therefore, the tape transport velocity change may be executed according to a velocity profile that does not require a velocity of tape transport during the velocity change interval that is greater than the selected final velocity (when a velocity change is executed from a tape transport velocity less than the final velocity) or less than the selected velocity (when a velocity change is executed from a tape transport velocity greater than the final velocity). However, the rate of tape transport velocity change must be sufficient to enable the displaceable head to be displaced a sufficient distance to compensate for the displacement that will result from such velocity change in the longitudinal tape position relative to the nominal position of the displaced head in the direction of tape transport. The result of following such velocity profile, however, is a permanent displacement of the head when the normal tape transport velocity is reached. This may be undesirable because a constant timing error is introduced in the information reproduced by the permanently displaced head.

When the transport of the tape is stopped from a noncontrol track locked velocity operating condition, such as may occur when the tape is transported by a video tape recording and reproducing apparatus during a shuttle, a jog or a variable velocity slow motion or fast motion operation, a stop servo system operates to stop the transport of the tape with an identifiable recorded control track transition positioned precisely relative to the nominal plane of rotation of the undeflected position of the rotary video reproduce head. This conditions the apparatus so that in response to the generation of a reproduce command being initiated by an operator for the purpose of having the video tape recording and reproducing apparatus operate in a desired reproducing mode, the recording and reproducing apparatus is caused to reproduce recorded video information and is control track and capstan tach locked virtually immediately, i.e., within a time, following the receipt of a velocity change command, that is less than an interval defined by just less than the number of video fields required to fully encode the television signal. For example, two fields are required to fully encode a monochrome television signal, four fields for a NTSC color television signal and eight for a PAL color television signal. A SECAM color television signal is defined by a twelve field sequence. For the purposes of this invention, however, a four field sequence enables execution of the desired velocity change. Moreover, if the tape transport mechanism is commanded to transport the tape at the normal record and/or reproduce velocity following such stop operation, control track synchronization and color frame synchronization of the operation of the apparatus is acquired prior to initiating acceleration of the transport of the tape at all.

Turning first to Figure 11, a synthetic control track signal is generated by a circuit 200 to provide to the control track servo information indicative of the position of the longitudinally transported tape relative to the nominal plane of rotation of the rotary head when the tape transport is stopped. Vertical sync is extracted from the reproduced video information by conventional circuitry (not shown), included in video tape recording and/or reproducing apparatus as the playback video head scans the tape, and is provided at an input 212 and coupled to the clock input of a flip-flop 216. A No. 1 field identification signal (of a four field sequence in a NTSC format color video information signal and of an eight field sequence in a PAL format color video information signal) also conventionally extracted from the reproduced video information signal is provided to a delay (one shot) circuit 228. The delay circuit 228 provides an output signal to the "set" input terminal of the flip-flop 216 to synchronize the same to the occurrence of the field No. 1 identification signal. The time constant of the one shot circuit 228 is set to properly locate the leading edge of the field No. 1 identification signal relative to the proximate control track transition of the synthetic control track signal into which the identification signal is inserted. When connected as shown, the flip-flop 216 is clocked by play back vertical sync and operates as a divide by two divider and provides a 30 Hertz (Hz) frame rate square wave signal at its output. The period of the square wave signal generated by the flip-flop 216 is therefore equal to that of a normal control track signal. However, the 60 Hz rate transitions of the square wave signal are coincident with the 60 Hz vertical sync signal, whereas the transitions of conventional control track signals are offset relative to vertical sync.

The square wave signal is employed to form a synthetic control track signal and, for uses of the synthetic control track signal irrelevant to the present invention, is combined with a short pulse to provide field identification information therein. The field identification pulse is added to the synthetic control track square wave signal synthesized by the flip-flop 216. The circuitry shown in Figure 11 provides a narrow pulse after the field No. 1 identification signal is received. It is delayed by the amount of the delay provided by the one shot 228. The delay circuit 228 times out and its Q-not output is coupled to trigger a monostable multivibrator, or one shot 230. The one-shot 230 responsively produces a narrow pulse at the proper time for adding to the square wave signal as the desired field identification signal and has a controlling time constant that is set to effect the generation of a field No. 1 identification signal of common duration for insertion in the synthetic control track signal. For a NTSC format color video information signal system the field No. 1 identification signal is inserted in the synthesized square wave signal to occur every two periods of the signal, since the identification signal is at a rate of 15 Hz (or 1/2 the frequency of the 30 Hz square wave signal). For a PAL system, the field No. 1 identification signal is at a rate of 1/4 the frequency of the synthesized square wave signal, hence, is inserted to occur every four periods of the synthesized signal. The output of the one-shot 230 is combined with the square wave of the flip-flop 216 in an NAND gate 218, and a synthetic control track signal having field identification signal information is produced at an output 232.

As previously mentioned, the timing of the synthetic control track is different from that of the conventional control track signal, which signal requires some modification for use in the operation of the control track servo. When the tape is driven at the normal record and/or reproduce velocity under servo control relative to the conventional control track and capstan tachometer signals, the control track signal transitions occur between vertical sync pulses. With reference to Figure 4, a control track servo 300 includes a control track error detector 343 that generates a control track related error signal in the form of a tape speed related voltage level that controls a following control track voltage controlled oscillator 345, which provides an output signal at a frequency that determines the speed of the capstan motor. This output signal is coupled to one input of a capstan tachometer error detector 347 and serves as a reference signal for comparison to the capstan tachometer signal. This error detector 347 provides a capstan servo error signal that is coupled to the capstan motor drive amplifier circuit 349 that responsively controls the drive provided to the capstan motor (not shown) to maintain the transport of the tape at the desired speed.

The control track related error signal is generated by sampling a ramp output of a linear ramp generator, with the sample being taken and held at a particular time, such as at the time of a control track transition. The ramp is reset by a delayed reference vertical sync signal. Samples are taken at the occurrenes of control track transitions, which nominally occur at the midpoints of the occurrences of the voltage ramp signals when the tape is transported at the correct normal record and/or reproduce velocity. Variations in the occurrences of the control track transitions relative to the generation of the ramp signal result in the ramp signal being sampled at points along the slope of the ramp signal which are either higher (tape speed too slow) or lower (tape speed too fast) than the midpoint of the ramp signal.

If a control track signal is generated using vertical sync pulses extracted from the video information signal reproduced by the rotating video playback head, the slope of the ramp must be increased because the head rotates, i.e., scans along the tape much faster than the longitudinal speed of the tape past the control track playback head. In an interval corresponding to about the duration 2-1/2 horizontal lines, or about one hundreth of the duration of a video field, the video head passes a longitudinal length of tape which corresponds to the distance that the tape moves relation to the conventional stationary control track playback head during the reproduction of one video field. Thus, to compensate for the loss in sensitivity produced by the one hundred times increase in the head to tape speed of the video head relative to the head to tape speed of the control track playback head, the slope of the ramp must be increased by the same factor to obtain the same resulting sensitivity.

When the synthetic control track signal is used to control the capstan servo, the slope of the ramp is sharply increased. The slope is increased by switching a switch located within the error detector 343, effectively to remove a large capacitor from the ramp generating circuit included in the control track error detector. The ramp is reset in response to the aforementioned delayed reference vertical sync. The delayed reference vertical sync is generated with an amount of delay which is changed depending upon whether regular or synthetic control track signals are used in the control track error detector 343. The delayed vertical sync is normally delayed by an interval corresponding approximately to the time of a full video field. In the synthetic control track mode, it is delayed by a slightly lesser amount to form an advanced reference vertical signal. The ramp is therefore reset slightly earlier by the advanced reference vertical signal than would otherwise occur.

An important consideration is that the timing of the ramp signal sampling in the control track error detector 42 is controlled so that the desired nominal zero tape speed error voltage level is identical whether the machine is using actual or synthetic control track signals.

Selection of the input signals to the control track servo 300 and slope of the ramp signal used in the error detector 343 are determined by the position of the switches 353 and 355, and the signal status on the synthetic control track command input line 341. Either the normal control track or the synthetic control track signal is selected for coupling to an input terminal 338 by an operator controlled switch 353 shown in Figure 4. Similarly, the normally delayed or advanced reference vertical signal is selected for coupling to an input 340 by another operator controlled switch 355 shown in Figure 4, the switches 353 and 355 being conjointly operated. When the operator initiates operation of the recording and reproducing apparatus to execute a tape transport stop from a non-control track lock operation, the synthetic control track command is provided on line 341. This causes the slope of the ramp sample signal generated in the error detector 342 to be increased as aforedescribed, and switches 353 and 355 to be positioned to couple the synthetic control track signal and advanced reference vertical sync signal to the control track error detector 343.

Thus far, the control track servo 300 has been described as arranged to operate when the transport of the tape is stopped under a control track locked condition. As will be described further hereinafter, the control track servo 300 also includes a stop servo velocity controlled oscillator (VCO) 320 that is switched into the control track servo 300 in place of the control track VCO 345 when the recording and reproducing apparatus is operated to stop the transport of the tape and a synthetic control track signal command is generated. The switching occurs in response to an operator initiated stop command being received over input line 352 while a synthetic control track signal command is also present on input line 341. An AND gate 323 responds to these commands by activating switches 333 and 335 to couple the stop servo VCO 320 between the control track error detector 343 and the capstan tach error detector 347 in place of the control track VCO 345. In addition, a switch 381 is responsive to the AND gate 323 to disconnect the reverse/forward tape transport direction input line 348 from the capstan tach error detector 347. This input line carries a signal, provided by the system control, that signifies the direction in which the tape is being transported in response to an operator manipulated tape direction control mechanism. In place of that signal, the stop servo provides a tape transport direction signal to the capstan tach error detector 347 over line 383 via switch 381. However, the capstan tach signal received on input line 346 is still provided to the capstan tach error detector 347 for use in controlling the transport of the tape.

In accordance with an important aspect of the present apparatus, when the tape is stopped and the apparatus is reproducing in the still field reproducing mode and a play command is generated by an operator who wishes to reproduce the recorded material at the normal reproducing or play speed, the apparatus utilizes a signal that identifies which field of a multi-field sequence is being reproduced. As previously indicated, a single field will be repetitively reproduced and the circuitry compares this identified field with the station reference field information. When there is a field match, i.e., the particular field being reproduced is identical to the field within the multi-field sequence of the station reference, then the field match signal enables the play command to be applied to the capstan servo and the capstan servo immediately accelerates the capstan to rapidly bring the speed of movement of the tape up to the normal speed. It should be understood that if the recording is a NTSC format recording of a color video information signal, then the multi-field sequence will be a four field sequence. If the recording is of a PAL format signal there is an eight field sequence. The circuitry which performs the identification of a particular field within a four field NTSC format sequence is conventional and in itself does not form a part of the present invention, except insofar as the identification information is utilized by the apparatus of the present invention. During reproducing, the playback sync processing circuitry can identify whether field one or field two of a particular frame is being reproduced and this is derived from the relationship of horizontal sync to vertical sync. A color framing circuit identifies whether an odd or even color frame is being reproduced by monitoring the relationship of horizontal sync to the color subcarrier phase relationship. The particular field of a four field sequence is thereby derivable from these relationships so that during reproducing, during still frame or otherwise, two binary inputs are capable of providing the identification of which field of the four field sequence of being reproduced at any given moment. Similarly, for a PAL format recording, a third input will identify which field of an eight field sequence is being reproduced at any given time.

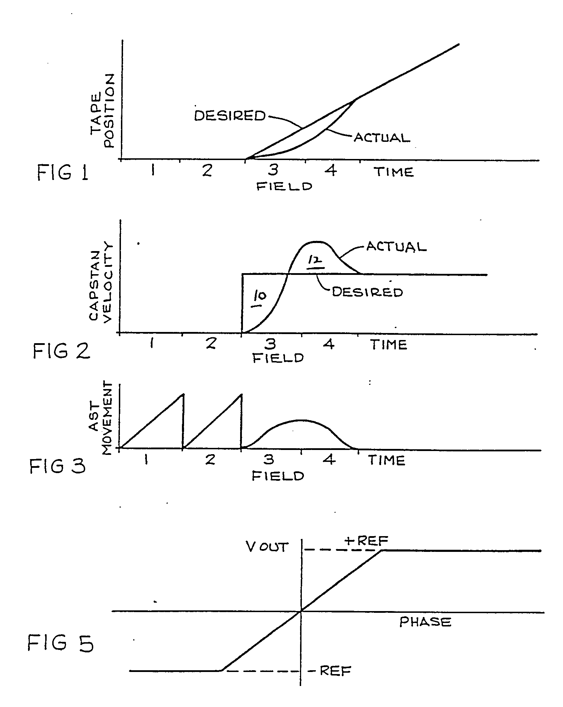

The manner in which the apparatus operates when it is switched from a still field reproducing mode to normal speed can be more readily appreciated from the following discussion in conjunction with Figures 1 through 3. As is shown in each of the figures, the abscissa of each of the graphs corresponds to time, and the apparatus changes from still field reproducing to normal speed reproducing in the time required to reproduce no more than five fields of information. In a NTSC system, it may require three field intervals to obtain the match signal and the match signal is required before acceleration begins. The acceleration to normal speed is accomplished in two field intervals. Thus, in Figures 1 to 3, the tape recording and reproducing machine is reproducing in the still field reproducing mode for field intervals 'one' and 'two', with field interval 'three' being the reference field interval which is matched to the field repetitively reproduced by the record and reproduce apparatus. When this match occurs, the capstan servo is commanded to accelerate the tape to normal speed. In Figure 1, the tape position is shown versus time, and at the start of field interval 'three', the tape is initially moved and the actual tape movement is shown to be a curved line with the desired tape position shown as a straight line, indicating infinite acceleration which, of course, is impossible to obtain. The graph of Figure 2 illustrates capstan velocity. It is desired to instantaneously obtain the actual normal tape velocity which would occur during normal play speed and it is shown to change instantaneously at the beginning of field interval 'three'. However, the actual velocity profile reflects actual rather than infinite acceleration during field interval three and to obtain the desired normal velocity in a manner whereby color framing is retained it is necessary to overshoot the normal speed to regain the timing relationship that was lost during acceleration. Thus, the area shown by the reference numeral 10 must equal the area shown by the reference numeral 12 to regain perfect phase coincidence from the point at which the tape was initially started, i.e., at the start of field interval 'three'. As shown in Figure 1, the actual tape position will lag the desired position during field interval 'three' as the tape is being accelerated and it will gradually be made to coincide with the desired tape position as a result of the velocity exceeding the normal velocity during acceleration.

The preferred embodiment of the present invention includes as previously mentioned an automatic scan tracking servo as which is effective to maintain the head on each track as it is being reproduced and to selectively reposition the head to begin following the next desired track. As shown in Figure 3, during still frame reproduction, such as occurs during the reproduction of fields 'one' and 'two' as illustrated, the head must be reset after the completion of the first field to begin replaying the same track again. At the instant the command to accelerate the tape is received, which instant is signified by a sync start command provided to an OR gate 391 (Figure 4) over input line 392 when the aforedescribed field match occurs and the transport of the tape is less than one-half the normal record and/or reproduce velocity, in either the forward or reverse tape transport directions, an AST normal signal is issued over line 393. It will be appreciated that the AST normal signal is also issued by the OR gate 391 in response to a control track lock condition being achieved. The OR gate 391 receives a signal over its input line 394 from the control track error detector 343 when this condition is achieved, for example, when the transport of the tape is changed from a velocity in excess of the aforementioned one-half normal tape transport velocity to the normal record and/or reproduce tape transport velocity and control track lock is achieved. The AST normal signal is coupled to the input of the automatic head position tracking servo 400 (Figure 10), which responds to inhibit the generation of head position reset commands (except at the limits of the deflection range of the movable element 401 carrying the reproduce head 402) while the tape is transport velocity change to the normal record/reproduce velocity is executed. This allows the head to follow the consecutively recorded tracks without being reset, even though the tape is transported at velocities other than the normal record and reproduce velocity during the 2-field interval velocity change. Track following by the movable reproduce head results from the detection of amplitude modulation of the reproduced radio frequency (RF) envelope formed by a carrier that is frequency modulated by the television signal information, which amplitude modulation is caused by the dithering of the movable element 400 as described in the aforementioned US-A-4,163,993. This reproduce signal is coupled from the reproduce head 402 to the automatic head position tracking servo 400 by input line 403.

The automatic head position tracking servo 400 will move the head 402 so as to maintain the head on the track being reproduced during the third (reference) field interval and, as the capstan is accelerated up to normal play speed, it will not have to be reset and it will maintain the head on the next track, i.e., that from which field four is reproduced; thereafter the head will not appreciably move, as is shown by the straight line subsequently of field four. Since the capstan accelerates the tape very rapidly, the automatic scan tracking servo will maintain the head on track and will be operating within its dynamic range, all of which means that the reproducing apparatus will produce a continuous signal and there will be no break-up of the picture viewed in a television monitor.

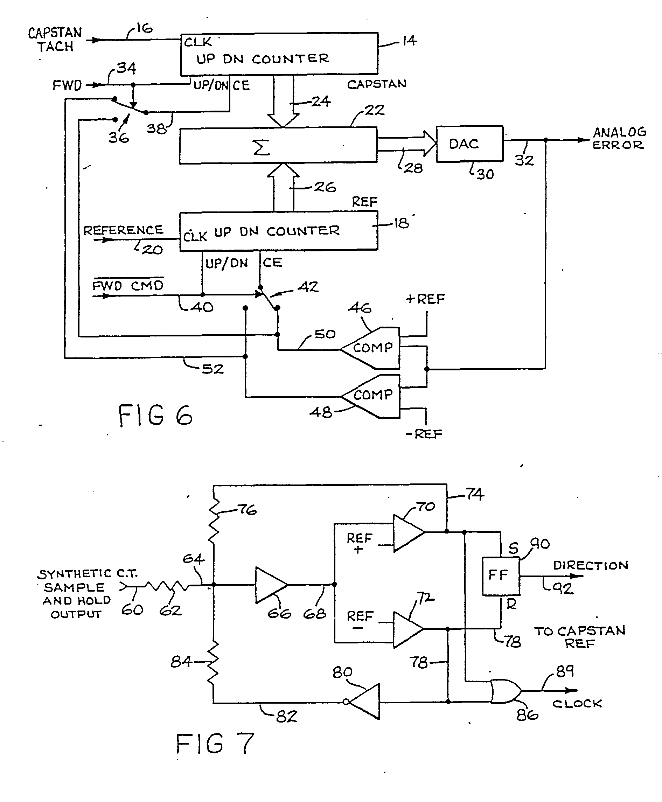

With reference to Figures 4 and 6, after a field match has occurred and the play command is applied to the capstan servo circuitry, the circuitry included in the capstan error detector 347 (Figure 4) and shown in detail in the block diagram of Figure 6 is effective to perform a phase comparison of the actual capstan rotational phase with a reference (provided by the control track VCO 345) and to generate an error signal which is applied to the motor drive amplifier 349 and which will return the capstan to the exact phase of the reference after the acceleration of the capstan has been completed. In other words, it maintains the field sequence phase relationship between the capstan-driven tape at the start of field 'three' of the field sequence identification signal as shown in Figure 2 and returns the capstan to coincide with the phase of reference at the end of the acceleration, i.e., at the conclusion of the reproduction of field four. It should be understood that when the machine is reproducing at normal speed it is in a capstan locked condition and if the tape is to be stopped from normal reproducing, the phase comparator circuitry will also be effective to stop the tape with, as previously mentioned, the control track transitions recorded along the tape precisely located relative to the nominal plane of rotation of the rotary video reproduce head. Thus, when the apparatus is operating in a still field reproducing mode, the tape will be positioned at a preferred predetermined location relative to control track locations so that when the acceleration command is provided after a field match is obtained, the phase comparator will maintain the transport of the tape during acceleration in a control track servo locked condition.

The phase comparator is shown in the block diagram of Figure 6 to include an 8-bit capstan up/down counter 14 that is clocked by the capstan tachometer pulses via a line 16. A reference clock is applied to an 8-bit reference up/down counter 18 via line 20. The output of the counter 14 is applied to a summing circuit 22 via lines 24 and the count of the counter 18 is applied to the summing circuit 22 via lines 26. The summing circuit effectively measures the difference between the counts of the counters and provides a difference signal on lines 28 which extend to a digital-to-analog converter 30 that provides on line 32 an analog error signal which is applied to the capstan servo circuit. When the capstan is moving forwardly, line 34 controls the up/down counter so that it is incremented. The line 34 also controls a switch 36 which is connected to a line 38 that enables the counter to operate. Reference counter 18 also has an up/down control line 40 which is set to cause the counter to count down when the capstan is going forwardly. This line 40 also controls a switch 42 that is connected to the enable line of the counter 18. The summing circuit provides a nominal output count that is preferably at one-half of its range, i.e., a count of 127. The count is applied to the digital-to-analog converter 30 to provide a zero voltage output indicating zero error when the sum between the digital values on lines 24 and 26 is a count of 127.

When the capstan servo is provided with a signal to begin acceleration of the tape, the capstan tachometer signal which clocks the capstan counter will cause it to begin counting upwardly, but by virtue of the fact that the tape is starting from a stop position and must accelerate up through the normal velocity, the reference counter 18 will be counting down at a rate that is initially faster than the rate of the capstan tachometer which clocks the counter 14. Thus, counter 18 will count downwardly faster than the capstan counter 14 counts upwardly and the summing circuit 22 will have a net count, less than 127, which is applied to the digital-to-analog converter 30, which outputs a corresponding negative analog signal to the amplifier 349. As the capstan accelerates to a velocity that exceeds normal velocity, i.e., the overshoot area shown in Figure 2 by the reference numeral 10, the capstan tachometer will clock the counter 14 more rapidly than the reference clock on line 20 clocks the down counter 18 and the summing circuit 22 will count upwardly and the number applied to the digital-to-analog converter 30 will produce an error signal on line 32 that will cause it to reduce the rate of acceleration until the desired velocity is achieved. When this occurs, the summing circuit will provide a nominal output on lines 28 which will cause a zero output voltage to be produced on line 32.

Line 32 is also applied to an input of a comparator 46 as well as to another comparator 48. The comparator 46 has a positive reference voltage applied to its other input, and similarly, comparator 48 has a negative reference applied thereto. If the limit of the summing circuit 22 is reached either in the positive or negative direction, then it is preferred that the counter which is causing the range to be reached be disabled, since it is not achieving any useful purpose. If the level of the analog error signal on line 32 exceeds the reference voltage in the positive direction, then comparator 46 will have its normally low output line 50 go high, so as to disable the counter 18. Similarly, if the value on line 32 exceeds the negative reference voltage in the negative direction as determined by comparator 48, then its normally low output 52 will go high and it will disable the capstan counter 14. If the capstan is moved in the reverse direction, then switches 36 and 42 are switched to the opposite position than that shown and the comparators will be effective to switch the opposite counters.

The phase versus voltage characteristic of the capstan servo is shown in Figure 5 and is generally linear through its effective range which extends from the positive reference value to its negative reference value: the reference values are applied to the inputs of the comparators 46 and 48. When the servo is operating normally, the output will generally be an incremental voltage having a variable duty cycle that reflects the count difference output of the summing circuit 22. If the count difference corresponds to the nominal count of 127, then there will be zero output as shown in the graph of Figure 5. If it increases by a single count, then a small amount of current will be provided at output line 32 and will be applied until a response by the capstan changes the counter values to return the summation circuit 22 output back to a count of 127.

As previously mentioned, the apparatus is particularly adapted to stop the transport of the tape with the control track transitions precisely located relative to the nominal plane of rotation of the rotary video reproduce head when the tape transport is stopped incident to a stop command that is provided while the apparatus is operating in a noncontrol track locked condition, such as would occur when the machine is in a shuttle mode, a variable velocity slow motion reproducing mode or in a jog mode. When the machine is provided with a stop command from a noncontrol track locked operating mode condition, a circuit operates to stop the tape in the manner described so that responsive to a nominal velocity reproduce command, the tape will be accelerated in a control track locked condition. The circuitry which accomplishes the stopping of the tape in its preferred position is illustrated in the block diagram of Figure 7 and is conveniently referred to as the stop servo circuitry. The basic capstan servo circuitry includes a sample and hold circuit which operates in a generally conventional manner in that it includes a ramp generator which generates a ramp waveform that is reset by control track transitions and the ramp is sampled at a predetermined time determined by the reference vertical signal. An error signal is generated by detecting the level of the ramp at the sample time. The stop servo circuit utilizes the sample and hold output for the purpose of adjusting the position of the tape after it has stopped so that the control track transitions are located precisely relative to the nominal plane of rotation of the rotary video reproduce head after termination of the operation of the stop servo circuit.

Thus, as shown in Figure 7, the sample and hold output is applied on line 60 and it is in turn applied through a resistor 62 to the input 64 of an integrator 66 which integrates a negative error positively and a positive error negatively. The output of the integrator appears on line 68 which is provided to the input of two comparators 70 and 72, the comparator 70 having a positive reference voltage applied at the other input thereof, the integrator 72 having a negative reference voltage applied to the other input thereof. The comparators function as oscillator circuits to provide pulses to the capstan servo together with a directional signal, to cause the capstan servo to move the tape one or more incremental distances so that the tape is properly positioned with a control track transition located relative to said nominal plane of rotation in the same manner as would occur if the tape were brought to a stop under a control track locked condition. Thus, comparator 70 has output line 74 which becomes active if the output of the integrator applied on line 68 exceeds the positive reference voltage coupled to the other input of the comparator. The line 74 extends to resistor 76 which by line 64 is coupled to the input of the integrator; thus when line 74 is active, the output signal of the integrator on line 68 is reduced. When it has been reduced to a level below the reference voltage, the comparator output will then switch low and the integrator is then subject to the level on the sample and hold line 60. If the sample and hold level still remains low, then the comparator 70 is again switched to repeat the sequence.

The output of the integrator 68 is also applied to the comparator 72 which has a negative reference voltage applied at its other input. The output line 78 becomes high if the value of the integrated output exceeds the reference value in the negative direction. By virtue of inverter 80, a low signal will be created on line 82 and this signal will be applied through resistor 84 to line 64 and the input of the integrator 66. Lines 74 and 78 are also applied to the input of an OR gate 86 which provides on line 88 the oscillatory output which is applied to the capstan servo circuitry via the reference counter 18 of Figure 6; the circuitry of Figure 6 causes the capstan to move the tape forward and eventually to the desired position. The direction of the movement is controlled by lines 74 and 78; these lines are applied to the set and reset terminals of a flip-flop 90 and the level of the flip-flop Q output on line 92 determines the direction of capstan movement. This is done by controlling the up/down line of the reference counter 18 to either increment or decrement the counter in accordance with the direction of movement that is desired of the capstan. The values of the reference voltages applied to the comparators 70 and 72 are determined to provide the appropriate degree of accuracy and by placing the comparator reference voltage values appropriately, there will not be any pulses produced on the line 88 if the tape is in the proper position. Stated in other words, the stop servo circuitry generates capstan tachometer pulses together with direction signals that are based upon the timing between the reference vertical and the off tape vertical in order to properly position the tape via the capstan phase comparator, i.e., position the tape so that the capstan tach error will be zero.

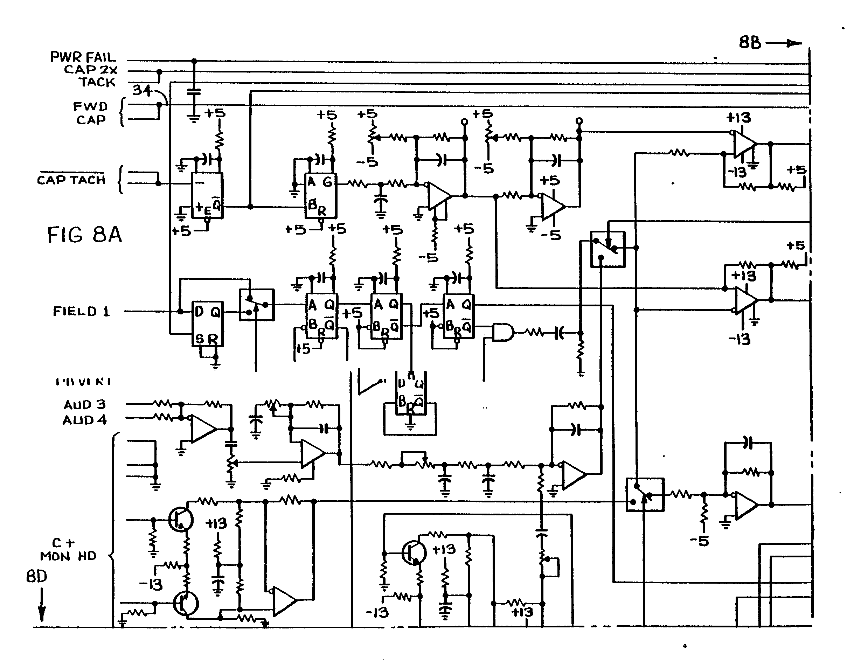

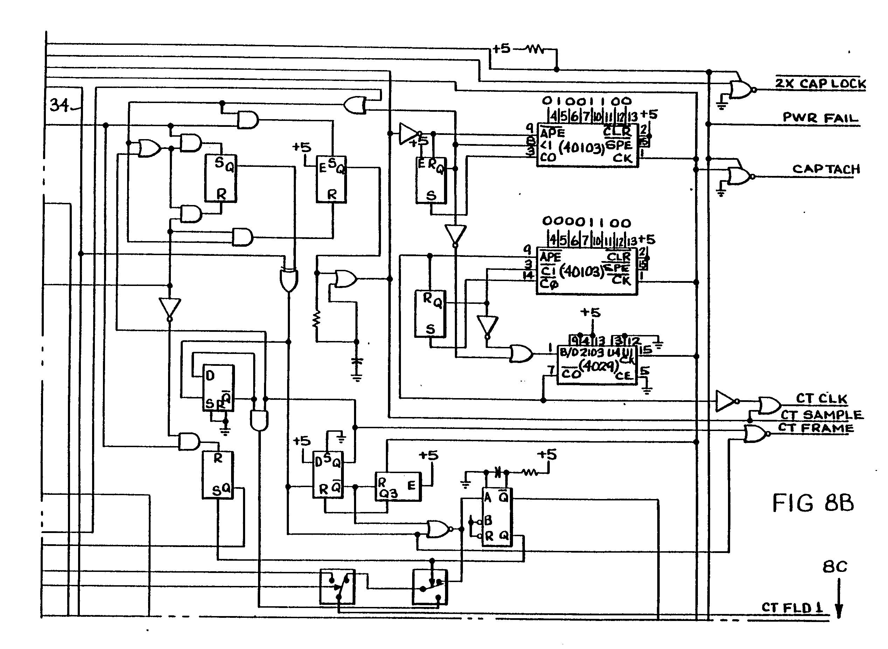

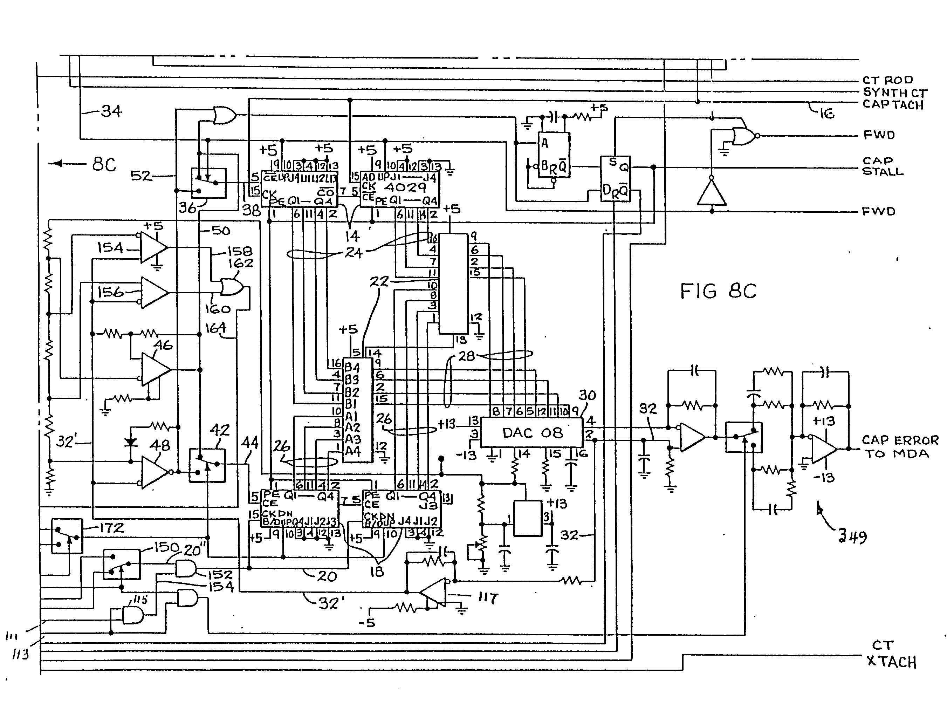

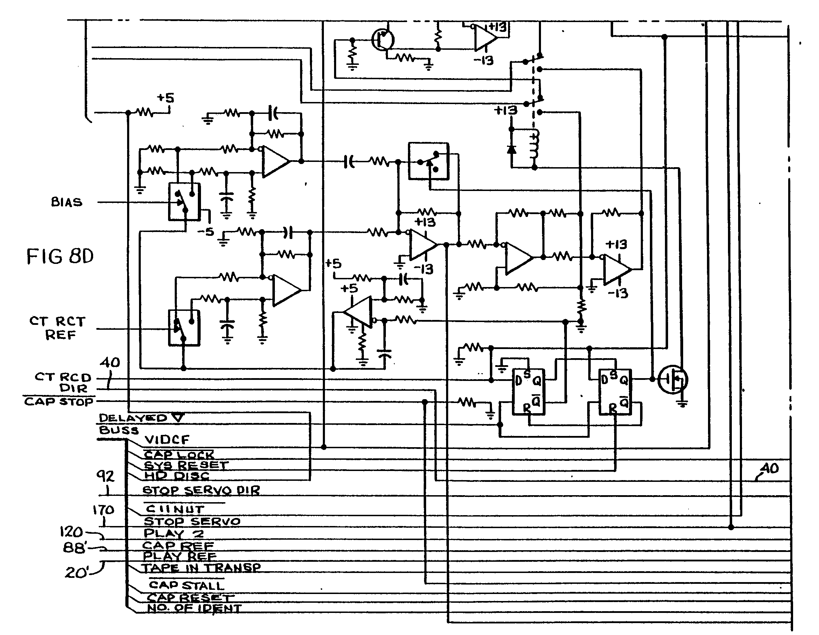

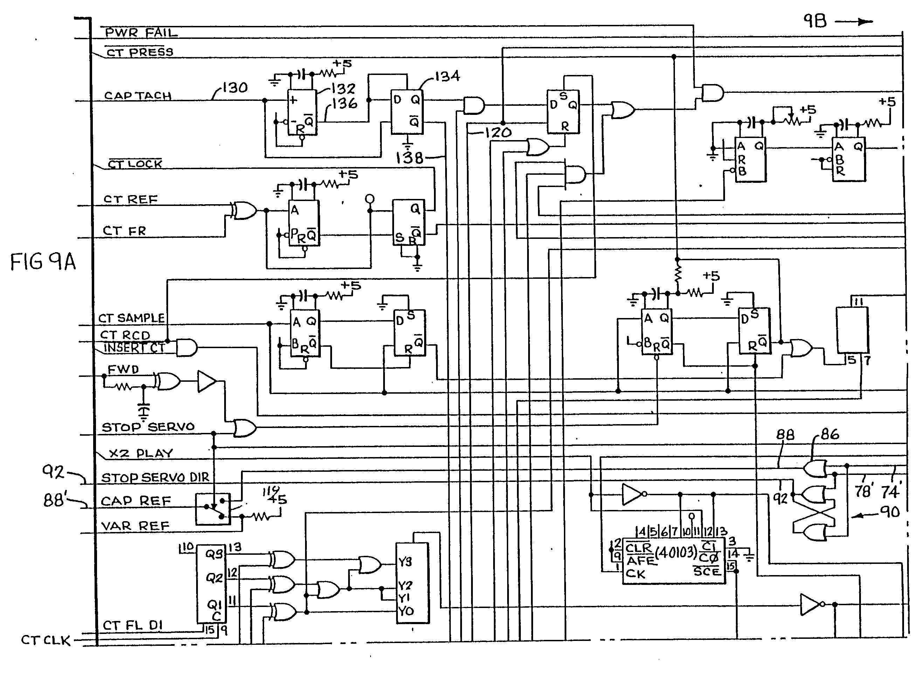

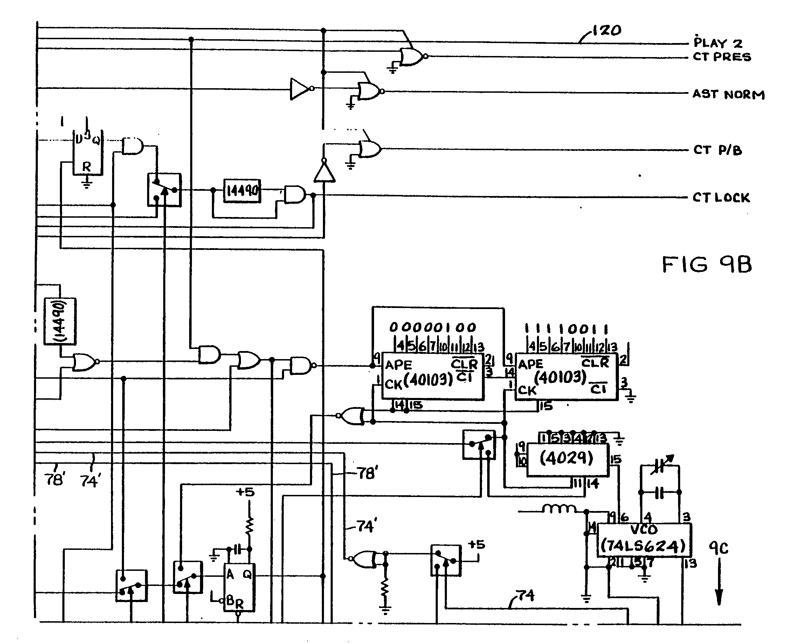

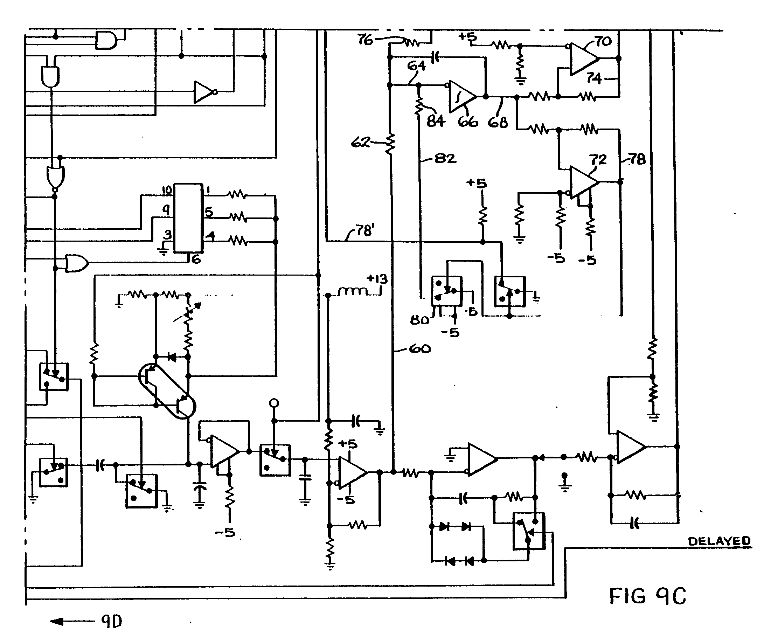

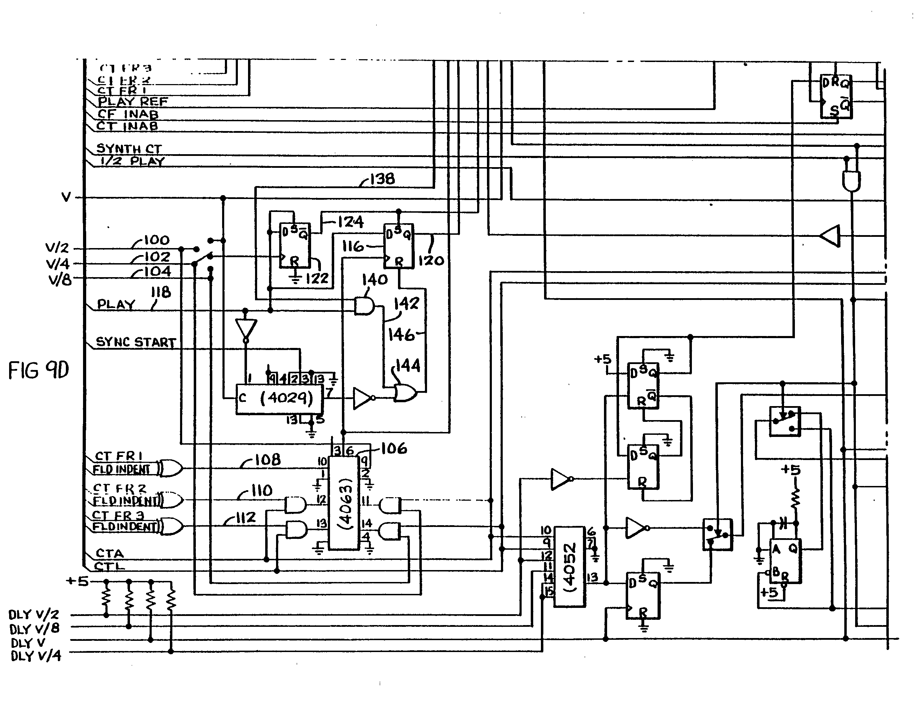

The detailed circuitry which carries out the operation described with respect to the block diagrams of Figures 6 and 7 is shown together with the entire capstan servo circuitry in Figures 8 and 9. The entire capstan servo circuitry will not be described in detail herein, nor will the detailed operation of the portions of the circuitry that comprise the present invention, except insofar as it is necessary to provide an understanding of the operation of the present invention.

Turning initially to the circuitry which provides a field match, reference is made to Figure 9(B) which includes reference signals, namely the reference vertical sync divided by two on line 100, reference vertical sync divided by four on line 102, and reference vertical sync divided by eight on line 104, which lines are extended to inputs of a 4-bit comparator 106. Field identification signals are also applied to the comparator 106 via lines 108, 110 and 112. The detailed circuitry shown in Figure 9 is adapted for use with a video information signal of the NTSC format as well as a PAL format signal. In the event the machine is operating with a NTSC signal, then lines 104 and 112 will not be utilized inasmuch as only a four field sequence exists with a NTSC format system. The signals on line 108 and 110 are binary signals which indicate the particular field of a four field sequence and are obtained from conventional circuitry that in and of itself is not part of the present invention and can be conventional. The signal level on line 108 defines whether the field being reproduced by the machine is an odd or even frame and the signal level on line 110 defines whether it is an odd or even field.

During still field reproducing the signal levels on lines 108 and 110 will be static inasmuch as the same field is being successively reproduced. If the tape is being moved so that successively recorded tracks (fields) are being reproduced, then the levels on lines 108 and 110 will change as different fields in the fourth field sequence are reproduced. With respect to the reference signals on lines 100 and 102, these reflect the field identification information from the station reference and are constantly changing.

Whenever the signal levels on lines 100 and 102 as applied to the comparator 106 are identical to the signal levels on lines 108 and 110 for a NTSC format system, there will be a field match signal generated; output line 114 will go high and will clock a D flip-flop 116 which has a play command in the form of a high level signal applied on line 118 from the machine control system. This high level play command will be clocked through the flip-flop 116 onto line 120 which activates the capstan servo to begin accelerating the tape up to normal reproduce velocity. The play command is generated by other circuitry in response to an operator placing the machine into normal play mode and from the description of the field match circuitry it should be appreciated that the play command is not applied to the capstan servo circuitry until a field match signal is produced by the comparator which clocks the play command (identified as 'PLAY 2') through the flip-flop 116 onto line 120 for application to the capstan servo circuitry. The above-described circuitry effectively delays the play command, which activates the servo to accelerate the tape, until a field match is obtained so that color framing is achieved before the tape moves.

When the machine is operating at normal play velocity and is subsequently given a stop command, the phase comparator of Figure 6 will also stop the tape with control track transitions positioned at known locations relative to the nominal plane of rotation of the rotary video reproduce head, as is desired. Since the tape is transported under control track lock during conditions this normal play mode, the circuitry of Figure 9(D) operates to activate the phase comparator circuit and stop the tape on field one for a NTSC system in the following manner. The V/4 signal on line 102 is applied to the clock input of a flip-flop 122, the D input of which is supplied by the signal on line 118, i.e., the play command. When tape transport stop is commanded, the line 118 is switched to provide a low signal to the D input of flip-flop 122 which is clocked by the signal on line 102 and its output on line 124 sets the flip-flop 116 which causes the play 2 command on line 120 to be switched low (and thereby terminate).

If the machine is operating in a slow motion reproducing mode at a relatively slow velocity, it should be appreciated that a field match condition signal may be generated by the comparator 106 and the play command will be clocked through the flip-flop 116 in the manner as previously described. However, as the velocity of the capstan increases, the difference between the reference and reproduced video related field identification signals on line 108 and 110 will gradually approach one another and it will take longer for a field match signal to be generated by the comparator 106. When the slow motion velocity exceeds approximately one-half normal play velocity, it is desirable not to utilize the field match to clock the play command to the capstan servo. The circuitry of Figures 9(A) and 9(D) effectively gate the play command immediately to the capstan servo rather than wait for a field match signal to be generated. This is accomplished by applying the capstan tachometer signal on line 130 to a one-shot 132 in addition to the clock input of a D flip-flop 134 so that if the output of the one-shot 132 appearing on line 136 fails to time out prior to the occurrence of a subsequent tachometer pulse, the D input of the flip-flop 134 will remain low. This low state will be clocked through the flip-flop 134 providing a high signal on the output line 138 that is applied to an AND gate 140. This high signal is ANDed with the play command to raise output line 142 to go high. This high state will be gated through OR gate 144 onto line 146 which will reset the flip-flop 116 and provide on line 120 the 'PLAY 2' command which will cause the capstan servo to be activated.

Turning now to the phase comparator circuitry shown in detail in Figures 8(D) and 8(C), the 'PLAY 2' command on line 120 is applied to the lower left portion of the circuitry of Figure 8(D). This line 120 extends to a switch 150 which is caused to move to the position as shown, wherein reference clock signals from input line 20' are applied to line 20'' and are gated through AND gate 152 to line 20 for clocking the reference counter 18. The tape transport command and capstan non-stopped signal are received on lines 111 and 113. The AND gate 152 is enabled by line 154 when the tape is in transport and the reel servo is active. Thus, when the 'PLAY 2' command is generated, the reference counter 18 (Figures 6 and 8(C)) will begin counting and will cause an error signal to be generated by the summing circuit 22 since the capstan is not moving at that instant. After the capstan has accelerated the tape up to the normal play velocity, the error signal on line 32 will become zero. The line 32 is coupled to an amplifier 117 of which the output is coupled by line 32' to the comparators 46 and 48 and also to comparators 154 and 154 which provide a small tolerance comparison so that when the capstan is essentially running at normal velocity, the output lines 158 and 160 will be switched low and an OR gate 162 will provide a low signal on line 164 indicating that the capstan is locked at the normal play velocity.

The detailed schematic diagrams of the stop servo circuitry is largely shown in Figures 9(C) and 9(B). When the machine control circuitry detects that the capstan servo is to be stopped from a noncontrol track locked mode of operation, a stop servo command signal is applied via line 170 shown in the lower left portion of Figure 8(B) and this signal switches a switch 172 to its alternate position (not shown) whereby the stop servo direction signal on line 92 is applied to control the up/down reference counter 18 and stop servo pulses are applied via the line 88'. The pulses are applied through the switch 150 which is placed in the alternate position (not shown) so that these pulses are applied to clock the up/down reference counter 18. In this manner, the phase comparator circuitry will effectively cause the error signals to be generated to reposition the tape as previously described.

It should also be appreciated, although it has not been specifically stated, that when the tape is properly located as previously described, the tracks are positioned relative to the reproducing head so that the movable element that carries the transducing head is in its optimum position whereby the automatic scan tracking servo can utilize its full dynamic range. This enables it to follow the track during subsequent acceleration in a manner as has been described with respect to the diagram of Figure 3. Since the automatic scan tracking servo will attempt to cause the head to follow the track, if the position of the track is such that the movable element is already extended through a substantial portion of its dynamic range, then it may be unable to deflect a sufficient amount, whereby it will not maintain appropriate tracking. The stop servo effectively places the tape so that the automatic scan tracking will function properly during subsequent acceleration to play velocity as is desired.

From the foregoing, it should be appreciated that a significantly improved capstan servo system and associated circuitry have been described which enables superior performance of a recording and reproducing machine. The apparatus of the present invention permits color frame synchronization to be accomplished responsive to a play command from a still field reproducing mode almost instantaneously. Moreover, the stop servo circuitry of the present invention automatically operates to correctly position the tape when the machine is stopped from a noncontrol track locked operating mode.

## Claims

1. Apparatus for positioning a tape in a video tape recording and reproducing machine with control track transitions recorded longitudinally along the tape at a predetermined position relative to the nominal plane of rotation of a rotating head (402) for reproducing video information from the tape, the rotating head being mounted on a movable element (401) for displacing the head transversely relative to the longitudinal direction of tracks along which the video information is recorded synchronously relative to the control track transitions, the movable element being controlled by a head tracking position servo (400) to cause the head to follow the tracks as video information are reproduced therefrom when the transport of the tape is stopped, the recorded video information including synchronizing signals which are reproduced from the tape by the rotating head, characterised by: means (170) for stopping the transport of the tape in response to a stop command; means responsive to the reproduction of a selected synchronizing signal after the tape is stopped and a reference timing signal for generating an error signal indicative of a phase error in the selected synchronizing signal; and means (Figure 7) responsive to the error signal for generating a tape transporting drive signal for effecting movement of the tape a distance and in a direction to eliminate the indicated phase error.

2. Apparatus according to claim 1 wherein said error signal has a magnitude and sense indicative of the magnitude and direction, respectively, of the phase error, and said tape transport drive signal generating means includes: means (66) for integrating the error signal to generate an integrated output signal; means (70) for comparing said integrated output signal with a positive reference level and providing a first signal to the integrating means for reducing the magnitude of the integrated output signal as long as the magnitude of the integrated output signal exceeds the positive reference level; means (72) for comparing said integrated output signal with a negative reference level and providing a second signal to the integrating means for reducing the magnitude of the integrated output signal as long as the magnitude of the integrated output signal exceeds the negative reference level; and means (86, 90) for generating a pulse drive signal and a drive direction signal in accordance with the provided first and second signals to effect movement of the tape by said distance and in said direction to eliminate the indicated phase error.

3. Apparatus for stopping the transport of a tape in a video tape recording and reproducing machine with control track transitions recorded longitudinally along the tape located at a predetermined position relative to a transducer (402) for transferring information with respect to the tape, the operation of the machine being controlled in accordance with reference signals including reference field identification signals identifying a sequence of a plurality of distinct reference field intervals recurring at a stable rate, the transport of the tape being effected by a capstan, characterised by: means for decelerating the transport of the tape to stop in response to a stop command; means (14, 22, 18) for comparing the phase of the capstan to the phase of a stable reference signal during the deceleration of the transport of the tape and generating an error signal indicative of the difference in compared phases; and means for controlling the capstan in accordance with the error signal as the transport of the tape is decelerated and stopped to locate the control track transition at the predetermined position.

4. A method of stopping the transport of a tape in a video tape recording and reproducing machine with control track transitions recorded longitudinally along the tape located at a predetermined position relative to a transducer for transferring information with respect to the tape, the operation of the machine being controlled in accordance with reference signals including reference field identification signals identifying a sequence of a plurality of distinct reference field intervals recurring at a stable rate, the transport of the tape being effected by a capstan controlled by a capstan servo, characterised by issuing a stop command to effect stopping of the transport of the tape; decelerating the transport of the tape to stop in response to the occurrence of a predetermined one of the reference field intervals following the issuance of the stop command; comparing the phase of the capstan to the phase of a stable reference signal during the deceleration of the transport of the tape; and controlling the capstan servo in accordance with the phase comparison to eliminate any phase difference between the compared signals as the transport of the tape is decelerated and stopped to locate the control track transitions at the predetermined position.

**Patentansprüche**

1. Anordnung zur Einstellung eines Bandes in einem Videoband-Aufzeichnungs- und Wiedergabegerät mit in Längsrichtung auf dem Band aufgezeichneten Regelspursprüngen relativ zur Nennrotationsebene eines rotierendes Kopfes (402) zur Wiedergabe von Videoinformation vom Band, wobei der rotierende Kopf zu seiner Querverschiebung relativ zur Längsrichtung der Spuren, in denen Videoinformation synchron zu den Regelspursprüngen aufgezeichnet ist, auf einem beweglichen Element (401) montiert ist, das bewegliche Element durch eine Kopfgleichlaufstellungs-Servoanordnung (400) so geregelt ist, daß der Kopf den Spuren folgt, wenn bei einem Stopp des Bandtransportes Videoinformation aus den Spuren wiedergegeben wird, und die aufgezeichnete Videoinformation durch den rotierenden Kopf vom Band wiedergegebene Synchronsignale enthält, gekennzeichnet durch Mittel (170) zum Abstoppen des Bandtransportes als Funktion eines Stoppbefehls, von einem nach dem Bandstoppen wiedergegebenen ausgewählten Synchronsignal angesteuerte Mittel zur Erzeugung eines ein Maß für einen Phasenfehler im ausgewählten Synchronsignal darstellenden Fehlersignals und vom Fehlersignal angesteuerte Mittel (Fig. 7) zur Erzeugung eines Bandtransport-Treibersignals zwecks Bewegung des Bandes um eine Strecke und in einer Richtung im Sinne der Eliminierung des angezeigten Phasenfehlers.

2. Anordnung nach Anspruch 1, in der das Fehlersignal eine ein Maß für die Größe bzw. Richtung des Phasenfehlers darstellende Größe bzw. Richtung aufweist und die Bandtransport-Treibersignalerzeugungsmittel folgende Komponenten umfassen: Mittel (66) zur Integration des Fehlersignals zwecks Erzeugung eines integrierten Ausgangssignals, Mittel (70) zum Vergleich des integrierten Ausgangssignals mit einem positiven Referenzpegel und Erzeugung eines ersten Signals für die Integrationsmittel zwecks Reduzierung der Größe des integrierten Ausgangssignals, solange dieses den positiven Referenzpegel übersteigt, Mittel (72) zum Vergleich des integrierten Ausgangssignals mit einem negativen Referenzpegel und Erzeugung eines zweiten Signals für die Integrationsmittel zwecks Reduzierung der Größe des integrierten Ausgangssignals, solange dieses den negativen Referenzpegel übersteigt, sowie Mittel (86, 90) zur Erzeugung eines impulsförmigen Treibersignals und eines Treiberrichtungssignals als Funktion des ersten und zweiten Signals zwecks Bewegung des Bandes um die Strecke und in der Richtung für die Eliminierung des angezeigten Phasenfehlers.

3. Anordnung zum Abstoppen des Bandtransports in einem Videoband-Aufzeichnungs- und Wiedergabegerät mit in Längsrichtung auf dem Band an einer vorgegebenen Stelle relativ zu einem Wandler (402) zur Übertragung von Information in Bezug auf das Band aufgezeichneten Regelspursprüngen, einer Regelung des Gerätebetriebs als Funktion von Referenzsignalen, welche Referenz-Teilbildidentifizierungssignale enthalten, die eine Folge einer Vielzahl von mit einer stabilen Folgefrequenz auftretenden eindeutigen Referenz-Teilbild-Intervallen identifizieren, und mit durch einen Bandantrieb bewirktem Bandtransport, gekennzeichnet durch Mittel zur Abbremsung des Bandtransports auf Stopp als Funktion eines Stoppbefehls, Mittel (14, 22, 18) zum Vergleich der Phase des Bandantriebs mit der Phase eines stabilen Referenzsignals während der Abbremsung des Bandtransports und Erzeugung eines ein Maß für die Differenz der verglichenen phasendarstellenden Fehlersignals und Mittel zur Regelung des Bandantriebs als Funktion des Fehlersignals beim Abbremsen und Stoppen des Bandtransports zwecks Lokalisierung des Regelspursprungs an der vorgegebenen Stelle.

4. Verfahren zum Abstoppen des Transports eines Bandes in neinem Videoband-Aufzeichnungs- und Wiedergabegerät mit in Längsrichtung auf dem Band an einer vorgegebenen Stelle relativ zu einem Wandler zur Übertragung von Information in Bezug auf das Band aufgezeichneten Regelspursprüngen, einer Regelung des Gerätebetriebs als Funktion von Referenzsignalen, welche Referenz-Teilbildidentifizierungsignale enthalten, die eine Folge einer Vielzahl von mit einer stabilen Folgefrequenz auftretenden eindeutigen Referenz-Teilbildintervallen identifizieren, und mit einem durch eine Bandantriebs-Servoanordnung geregelten Antrieb für das Band, dadurch gekennzeichnet, daß zum Abstoppen des Bandtransports ein Stoppbefehl erzeugt wird, der Bandtransport zwecks Abstoppens als Funktion eines vorgegebenen, auf die Erzeugung des Stoppbefehls folgenden Referenz-Teilbild-Intervalls abgebremst wird, während der Abbremsung des Bandtransports die Phase des Bandantriebs mit der phase eines stabilen Referenzsignals verglichen wird, und die Bandantriebs-Servoanordnung als Funktion des Phasenvergleichs geregelt wird, um bei Abbremsung des Bandtransports zwecks Einstellung der Regelspursprünge auf die vorgegebene Stelle Phasendifferenzen zwischen den verglichenen Signalen zu eliminieren.

## Revendications

1. Appareil pour positionner une bande magnétique dans un appareil de reproduction et d'enregistrement vidéo sur bande magnétique, des transitions de pistes de pilotage étant enregistrées longitudinalement le long de la bande à une position prédéterminée par rapport au plan nominal de rotation d'une tête rotative (402) pour reproduire des informations vidéo à partir d'une bande, la tête rotative étant montée sur un élément mobile (401) pour déplacer la tête transversalement par rapport à la direction longitudinale de pistes le long desquelles les informations vidéo sont enregistrées en synchronisme par rapport aux transitions de pistes de pilotage, l'élément mobile étant commandé par un asservissement du positionnement sur piste de la tête (400) pour assurer que la tête suive les pistes pendant la reproduction d'informations vidéo à partir de celles-ci lorsque le transport de la bande est arrêté, les informations vidéo enregistrées comprenant des signaux de synchronisation qui sont reproduits à partir de la bande par la tête rotative, caractérisé par: des moyens (170) pour arrêter le transport de la bande en réponse à une commande d'arrêt; des moyens réagissant à la reproduction d'un signal de synchronisation sélectionné après arrêt de la bande et à un signal de rythme de référence pour engendrer un signal d'erreur représentatif d'une erreur de phase dans le signal de synchronisation sélectionné; et des moyens (figure 7) réagissant au signal d'erreur pour engendrer un signal de pilotage du transport de la bande pour effectuer le déplacement de la bande d'une distance et dans une direction afin d'éliminer l'erreur de phase indiquée.

2. Appareil selon la revendication 1, dans lequel ledit signal d'erreur présente une valeur et un sens représentatifs de la valeur et de la direction, respectivement, de l'erreur de phase, et lesdits moyens générateurs du signal de pilotage du transport de la bande comprennent: des moyens (66) pour intégrer le signal d'erreur pour générer un signal de sortie intégré; des moyens (70) pour comparer ledit signal de sortie intégré à un niveau de référence positif et pour délivrer un premier signal aux moyens intégrateurs afin de diminuer la valeur du signal de sortie intégré tant que la valeur du signal de sortie intégré dépasse le niveau de référence positif; des moyens (72) pour comparer ledit signal de sortie intégré à un niveau de référence négatif et pour délivrer un second signal aux moyens intégrateurs afin de diminuer la valeur du signal de sortie intégré tant que la valeur du signal de sortie intégré dépasse le niveau de référence négatif; et des moyens (86, 90) pour engendrer un signal d'entraînement à impulsions et un signal de direction de l'entraînement conformément aux premier et second signaux fournis afin d'effectuer le déplacement de la bande de ladite distance et dans ladite direction pour éliminer l'erreur de phase indiquée.

3. Appareil pour arrêter le transport d'une bande magnétique dans un appareil de reproduction et d'enregistrement vidéo sur bande magnétique, des transitions de pistes de pilotage enregistrées longitudinalement le long de la bande étant situées en un emplacement prédéterminé par rapport à un transducteur (402) pour effectuer le transfert d'informations relativement à la bande, le fonctionnement de l'appareil étant commandé conformément à des signaux de référence comprenant des signaux d'identification de trame de référence identifiant une séquence d'une pluralité d'intervalles de trame de référence distincts se répétant à une cadence régulière, le transport de la bande étant effectué par un cabestan, caractérisé par: des moyens pour ralentir le transport de la bande jusqu'à l'arrêt en réponse à une commande d'arrêt; des moyens (14, 22, 18) pour comparer la phase du cabestan à la phase d'un signal de référence stable pendant le ralentissement du transport de la bande et pour engendrer un signal d'erreur représentatif de la différence des phases comparées; et des moyens pour commander le cabestan conformément au signal d'erreur lors du ralentissement et de l'arrêt du transport de la bande pour situer la transition de la piste de pilotage à l'emplacement prédéterminé.

4. Procédé d'arrêt du transport d'une bande magnétique dans un appareil de reproduction et d'enregistrement vidéo sur bande magnétique, des transitions de pistes de pilotage enregistrées longitudinalement le long de la bande étant situées en un emplacement prédéterminé par rapport à un transducteur pour transférer des informations relativement à la bande, le fonctionnement de la machine étant commandé conformément à des signaux de référence comprenant des signaux d'identification de trame de référence identifiant une séquence d'une pluralité d'intervalles de trame de référence distincts se répétant à une cadence régulière, le transport de la bande étant effectué par un cabestan commandé par un asservissement de cabestan, caractérisé par l'émission d'une commande d'arrêt pour effectuer l'arrêt du transport de la bande; le ralentissement du transport de la bande jusqu'à l'arrêt en réponse à l'apparition d'un intervalle prédéterminé parmi les intervalles de trame de référence suite à l'émission d'une commande d'arrêt; la comparaison de la phase du cabestan à la phase d'un signal de référence stable pendant le ralentissement du transport de la bande; et la commande de l'asservissement du cabestan conformément à la comparaison de phases pour éliminer toute différence de phase entre les signaux comparés lors du ralentissement et de l'arrêt du transport de la bande pour situer les transitions des pistes de pilotage à l'emplacement prédéterminé.

FIG 1

DESIRED

ACTUAL

TAPE POSITION

1  2  3  4  TIME
FIELD

FIG 2

CAPSTAN VELOCITY

ACTUAL

12

10

DESIRED

1  2  3  4  TIME
FIELD

FIG 3

AST MOVEMENT

1  2  3  4  TIME
FIELD

FIG 5

V OUT

+REF

PHASE

-REF

EP 0 119 200 B1

FIG 4

FIG 10

FIG 11

EP 0 119 200 B1

FIG 6

FIG 7

FIG 8A

PWR FAIL
CAP 2X
TACK
FWD CAP
CAP TACH
FIELD 1
AUD 3
AUD 4
C+
MON HD

8B
8D
34

FIG 8B

FIG 8C

FIG 8D

FIG 9A

EP 0 119 200 B1

FIG 9B

FIG 9C

FIG 9D

(4052)
(4029)
(4063)

CT FR3
CT FR2
CT FR1
PLAY REF
CF INAB
CT INAB
SYNTH CT
1/2 PLAY
PLAY
SYNC START
CT FR1 FLD INDENT
CT FR2 FLD INDENT
CT FR3 FLD INDENT
CTA
CTL
+5

V
V/2
V/4
V/8

DLY V/2
DLY V/8
DLY V
DLY V/4

100 102 104 118 138 124 116 120 122 140 142 146 144 106 108 110 112 316